# EUROPÄISCHE PATENTANMELDUNG

(11) **EP 0 921 160 A1**
(43) Veröffentlichungstag der Anmeldung: **09.06.1999**
(21) Anmeldenummer: 98120370.6
(22) Anmeldetag: 28.10.1998
(51) Int. Cl.: C08L 75/00, C08L 75/04

(54) **Transparente Mischungen enthaltend thermoplastische Polyisocyanat-Polyadditionsprodukte, Polyvinylchlorid und Stabilisatoren**

(30) Priorität: 08.12.1997 DE 19754299
(71) Anmelder: BASF AKTIENGESELLSCHAFT, 67056 Ludwigshafen (DE)
(72) Erfinder: Brüning, Ines Dr., 49356 Diepholz (DE); Hub, Hans-Henning Dr., 67549 Worms (DE); Hilmer, Klaus, 49448 Marl (DE); Harrop, Douglas John, 32351 Dielingen (DE); Scholz, Günter Dr., 49448 Lemförde (DE)

(57) **Zusammenfassung**

Transparente Mischungen enthaltend (a) thermoplastische Polyisocyanat-Polyadditionsprodukte, (b) Polyvinylchlorid und 3 bis 30 Gew.-Teile, bezogen auf 100 Gew.-Teile Polyvinylchlorid, (c) Stabilisatoren, die bei der Herstellung der Mischungen in der Komponente (a) und/oder (b) löslich sind und eine Verfärbung der Mischungen aufgrund der thermischen Belastung bei der Herstellung verhindern.

## Beschreibung

Die Erfindung betrifft transparente Mischungen enthaltend (a) thermoplastische Polyisocyanat-Polyadditionsprodukte, (b) Polyvinylchlorid und 3 bis 30 Gew. -Teile, bezogen auf 100 Gew. -Teile Polyvinylchlorid, (c) Stabilisatoren, die bei der Herstellung der Mischungen in der Komponente (a) und/oder (b) löslich sind und eine Verfärbung der Mischungen aufgrund der thermischen Belastung bei der Herstellung verhindern. Des weiteren bezieht sich die Erfindung auf Verfahren zur Herstellung dieser transparenten Mischungen sowie auf die Verwendung solcher Mischungen.

Mischungen enthaltend Polyvinylchlorid, im folgenden als PVC bezeichnet, und thermoplastische Polyurethane, abgekürzt TPU genannt, sind allgemein bekannt. Von besonderem Interesse für den Anwender sind die sehr gute Mischbarkeit der Komponenten sowie die geringe Oberflächenklebrigkeit der Mischungen, die mit reinen TPU insbesondere bei transparenten Materialien nur schwierig zu erreichen ist. Die Herstellung der Mischungen erfolgt vorzugsweise bei Temperaturen oberhalb des Schmelzpunktes des eingesetzten TPUs, um ein homogenes Produkt zu erreichen. Es ist bekannt, daß eine thermische Belastung oder Bestrahlung des PVCs zu einer Abspaltung von HCl und der Bildung von langkettigen Polyenen führen kann (siehe: S. Hollande und J.-L. Laurent, Polymer Degradation and Stability 55, 141-145, 1997; J.G. Martinez et al., AN-TEC, 3383-3387, 1996). Diese teilweise Zersetzung des PVCs wird für die Verfärbung von Materialien enthaltend PVC verantwortlich gemacht, die insbesondere bei der Herstellung von transparenten Mischungen unerwünscht ist. Bislang waren diese Verfärbungen gerade bei PVC/TPU-Mischungen nicht zu vermeiden, da diese Mischungen bei Temperaturen hergestellt werden, die bereits zu einer Zersetzung des PVCs und damit Verfärbung der Mischung führen.

Der vorliegenden Erfindung lag deshalb die Aufgabe zugrunde, transparente Mischungen enthaltend (a) thermoplastische Polyisocyanat-Polyadditionsprodukte und (b) Polyvinylchlorid zu entwikkeln, die nur eine sehr geringe oder bevorzugt keine Verfärbungen aufweisen.

Diese Aufgabe konnte erfindungsgemäß durch die eingangs beschriebenen Mischungen gelöst werden.

Als (a) TPU können in den erfindungsgemäßen Mischungen allgemein übliche TPU verwendet werden, die nach bekannten Verfahren aus (d) Isocyanaten, (e) gegenüber Isocyanaten reaktiven Verbindungen und gegebenenfalls (f) Kettenverlängerungsmitteln gegebenfalls in Gegenwart von (g) Katalysatoren und/oder (h) Hilfs- und/oder Zusatzstoffen hergestellt werden können, wobei das Verhältnis der Isocyanatgruppen der Komponente (d) zur Summe der gegenüber den Isocyanaten reaktiven Gruppen der Komponenten (e) und gegebenenfalls (f) üblicherweise 1:0,9 bis 1:1,1 beträgt.

Die Mischungen können als (b) allgemein übliches PVC enthalten, das nach allgemein bekannten Verfahren mit üblichen Ausgangsstoffen hergestellt werden kann. Der K-Wert des in den erfindungsmäßen Mischungen eingesetzten PVCs beträgt üblicherweise 50 bis 80, bevorzugt 56 bis 74. Das in den erfindungsgemäßen Mischungen enthaltene PVC kann bevorzugt als üblicher PVC-compound zusammen mit üblichen Additiven und Begleitstoffen, beispielsweise Weichmachern, Lichtschutzmittel, Stabilisatoren, Gleitmitteln, Treibmitteln, Haftvermittlern, Füllstoffen und/oder weiteren bekannten Zusatzstoffen eingesetzt werden, soweit diese Additive und Begleitstoffe die Transparenz der erfindungsgemäßen Mischungen nicht beeinträchtigen.

Als Weichmacher eignen sich Phthalate, beispielsweise die handelsüblichen Phthalsäureester, z.B. Diethylhexylphthalat und/oder Diisononylphthalat. Weiterhin bevorzugte Weichmacher sind die Adipinsäureester sowie Polyester aliphatischer Dicarbonsäuren. Weiterhin eignen sich epoxidierte Fettsäureester wie epoxidiertes Sojabohnenöl und epoxidiertes Leinöl. Bevorzugt können solche Weichmacher in einer Menge zusammen mit dem PVC eingesetzt werden, daß die Kältebruchfestigkeit des PVCs zusammen mit dem Weichmacher unterhalb -10°C, vorzugsweise unterhalb -15°C liegt. Die Einstellung der Mengenverhältnisse läßt sich durch wenige Vorversuche ermitteln.

Als Lichtschutzmittel können alle üblichen Lichtschutzmittel eingesetzt werden, beispielsweise Verbindungen auf Basis von Benzophenon, Benzotriazol, Zimtsäure, organischen Phosphiten und Phosphoniten sowie sterisch gehinderte Amine.

Als Gleitmittel kommen beispielsweise Kohlenwasserstoffe wie Öle, Paraffine, PE-Wachse, PP-Wachse, Fettalkohole mit 6 bis 20 C-Atomen, Ketone, Carbonsäuren wie Fettsäuren, Montansäure oder oxidiertes PE-Wachs, Carbonsäureamide sowie Carbonsäureester, z.B. mit den Alkoholen, Ethanol, Fettalkoholen, Glycerin, Ethandiol, Pentaerythrit und langkettigen Carbonsäuren als Säurekomponente in Betracht.

Bevorzugt setzt man in den erfindungsgemäßen Mischungen PVC (b) in Form eines PVC-compounds ein. Diese PVC-compounds enthalten bevorzugt, bezogen auf 100 Gew.-Teile PVC, 12 bis 114 Gewichtsteile eines oder mehrerer Weichmacher, bis 15, bevorzugt 0,1 bis 15 Gewichtsteile Gleitmittel und bis 1,5, bevorzugt 0,05 bis 1,5 Gewichtsteile Lichtschutzmittel.

Soweit die Begleitstoffe den nachfolgend beschriebenen Stabilisatoren (c) entsprechen, werden die Begleitstoffe per Definition als Stabilisatoren (c) behandelt. Als (c) Stabilisatoren werden in den erfindungsgemäßen Mischungen solche verwendet, deren Einsatz in den erfindungsgemäßen Mengen nicht zu einer Trübung der Mischungen führen. Die Stabilisatoren sollten somit in der Komponente (a) und/oder (b) löslich sein, wobei der Begriff "löslich" die Eigenschaft beschreibt, daß die Komponente (c) in der erfindungsgemäßen Mischung nicht als dispergierte Teilchen vorliegen, die aufgrund ihrer Größe und Lichtbrechungseigenschaften zu einer sichtbaren Trübung der Mischung führen. Eine solche nicht erfindungsgemäße sichtbare Trübung durch eine dispergierte Komponente (c) ist beispielsweise durch Streulicht nachweisbar. Bevorzugt liegen die Komponenten (a), (b) und (c) homogen verteilt in den erfindungsgemäßen Mischungen vor.

Als Stabilisatoren (c) können Barium-, Calzium- und/oder Zinkverbindungen, beispielsweise Salze des Bariums-, Calziums- und/oder des Zinks mit üblichen Carbonsäuren, bevorzugt mindestens eine Barium- und/oder Calziumverbindung, in Kombination mit mindestens einer Zinkverbindung, verwendet werden. Die Metallcarboxylate, die auch als Mischcarboxylate, beispielsweise als Barium/ Zink- und/oder Calzium/Zink-Mischcarboxylate eingesetzt werden können, basieren üblicherweise auf linearen oder verzweigten, gesättigten oder ungesättigten, mono- oder mehrfunktionellen Carbonsäuren mit 3 bis 30, bevorzugt 6 bis 20 Kohlenstoffatomen, beispielsweise Stearinsäure, Laurinsäure, Palmitinsäure, Ölsäure, Octansäure und/oder Rizinolsäure. Des weiteren können die Carboxylate auch auf aromatischen mono- oder mehrfunktionellen Carbonsäuren, beispielsweise Benzoesäure basieren.

Zusätzlich zu den oben genannten Barium/Zink- und/oder Calzium/Zink-Stabilisatoren (c) können organische Phosphite, beispielsweise Alkylarylphosphite, z.B. Dialkylarylphosphite mit 6 bis 24 Kohlenstoffatomen pro Alkylrest, eingesetzt werden.

Des weiteren kommen als Stabilisatoren (c) Metallcarbonate, beispielsweise Calzium- und/oder Zinkcarbonat in Betracht.

Zudem können übliche Antioxidantien, beispielsweise phenolische Antioxidantien, z.B. alkylierte Monophenole, Ester und/oder Amide der β-(3,5-di-tertierbutyl-4-hydroxyphenyl-propionsäure und/oder Benzotriazole eingesetzt werden.

Beispielhaft sind mögliche Antioxidantien in EP-A 698637 und EP-A 669367 erwähnt. Konkret kann man als phenolische Antioxidantien 2,6-Ditertierbutyl-4-methylphenol, Pentaerythrityl-tetrakis-[3-(3,5-ditertierbutyl-4-hydroxyphenyl)-propionat und N,N'-Di- (3,5-ditertierbutyl-4-hydroxyphenyl-propionyl)-hexamethylendiamin erwähnen.

Des weiteren ist möglich epoxidierte Öle oder Fettsäuren, beispielsweise epoxydiertes Sojabohnenöl, Leinsamenöl und/oder Rizinusöl als Stabilisatoren einzusetzten.

Die genannten Stabilisatoren können einzeln oder in Mischungen zusammen mit den oben genannten Barium/Zink- und/oder Calzium/Zink-Verbindungen verwendet werden. Außerdem können weitere, bekannte Stabilisatoren wie Zinn-organische Verbindungen erfindungsgemäß eingesetzt werden.

Bevorzugt setzt man Stabilisatoren enthaltend mindestens eine Barium- und/oder Calziumverbindung in Kombination mit mindestens einer Zinkverbindung ein. Besonders bevorzugt setzt man Stabilisatoren enthaltend mindestens ein Barium- und/oder Calziumcarboxylat in Kombination mit mindestens einem Zinkcarboxylat ein. Insbesondere verwendet man als Stabilisatoren solche enthaltend eine Kombination aus mindestens einem Barium- und/oder Calziumcarboxylat und mindestens einem Zinkcarboxylat zusammen mit mindestens einem weiteren Stabilisator ausgewählt aus phenolischen Antioxidantien, epoxydierten Öle oder Fettsäuren, Metallcarbonate und organischen Phosphiten.

Bevorzugt enthalten die erfindungsgemäßen Mischungen
50 bis 99,195 Gew.-% (a),
0,7 bis 35 Gew.-% (b)
0,084 bis 40 Gew.-% Weichmacher und
0,021 bis 10,5 Gew.-% (c), wobei die Gewichtsangaben auf das Gesamtgewicht der Komponenten (a), (b) und (c) bezogen sind.

Die erfindungsgemäßen transparenten Mischungen enthaltend (a) thermoplastische Polyisocyanat-Polyadditionsprodukte, (b) Polyvinylchlorid und 3 bis 30 Gew.-Teile, bevorzugt 5 bis 20 Gew.-Teile, bezogen auf 100 Gew.-Teile PVC, (c) Stabilisatoren, die bei der Herstellung der Mischungen in der Komponente (a) und/oder (b) löslich sind und eine Verfärbung der Mischungen aufgrund der thermischen Belastung bei der Herstellung verhindern, können dadurch hergestellt werden, daß man (c) der Komponente (a) und/oder (b) vollständig oder in Teilmengen vor, während und/oder nach dem homogenen Mischen von (a) und (b) zusetzt.

Die Gewichtsangaben zu (b) beziehen sich auf das Gewicht des PVCs ohne Additive oder Begleitstoffe, wobei das PVC bevorzugt als PVC-compound, d.h. insbesondere in Mischung mit den genannten Begleitstoffen eingesetzt werden kann.

Bei der Mischung der Komponenten (a) und (b) liegen diese bevorzugt in einem fließfähigen, erweichten oder geschmolzenen Zustand vor.

Beispielsweise kann (c) der geschmolzenen oder festen Komponente (a) und/oder (b) zugegeben werden und diese Mischung anschließend, beispielsweise in einem Extruder bei einer Temperatur, die über den Schmelztemperaturen von (a) und (b) liegt, mit (b) und/oder (a) zu einem homogenen Produkt gemischt werden. Es ist ebenso möglich, während und/oder nach dem Schmelzen und der homogenen Vermischung der Komponenten (a) und (b) die Komponente (c) dieser Mischung zuzugeben, wobei die Komponente (c) bevorzugt während der Erhitzung der Komponente (b) auf die Schmelztemperatur von (a) bereits in der Mischung enthalten ist, um eine Verfärbung der Mischung durch die Erwärmung zu verhindern.

Das homogene Vermischen der Komponenten erfolgt bevorzugt bei Temperaturen, die über den Schmelztemperaturen von (a) und (b) liegen. Üblicherweise beträgt die Temperatur, bei der die Vermischung der Komponenten erfolgt, 160 bis 250 °C, vorzugsweise 190 bis 240 °C, besonders bevorzugt 200 bis 220 °C.

Das Vermischen der Komponenten zu einem homogenen Produkt kann mit üblichen Geräten, die Einrichtungen zum Heizen und Rühren, Kneten oder Walzen aufweisen, kontinuierlich oder diskontinuierlich bevorzugt mit Entgasung durchgeführt werden. Bevorzugt erfolgt das Vermischen der Komponenten (a), (b) und (c) in einem üblichen Extruder.

Das Verfahrensprodukt, d.h. die erfindungsgemäßen transparenten Mischungen können beispielsweise pelletiert oder granuliert, oder nach allgemein bekannten Verfahren, beispielsweise durch Extrusion oder Spritzguß, zu transparenten Formkörpern, Folien, Schläuchen, Kabelummantelungen, Platten oder spritzgegossenen Formkörpern aller Art verarbeitet werden.

Die erfindungsgemäßen Mischungen weisen die folgenden Vorteile auf:
- Die Mischungen sind transparent. Trübungen beispielsweise durch dispergierte Stabilisatoren, die eine sichtbare Lichtstreuung verursachen, konnten vermieden werden.
- Durch den erfindungsgemäßen Einsatz von Stabilisatoren kann die Verarbeitungstemperatur hoch genug gewählt werden, um das TPU vollständig aufzuschmelzen und homogene Produkte herzustellen, ohne daß Verfärbung durch einen thermischen Abbau des PVC eintritt.
- Eine Verfärbung der Mischungen beispielsweise durch Erwärmung oder Bestrahlung der Mischung wird vermieden.

Im Folgenden werden beispielhaft die Ausgangskomponenten sowie Herstellverfahren für TPU und PVC dargestellt.
d) Als organische Isocyanate (d) kommen vorzugsweise aliphatische, cycloaliphatische und insbesondere aromatische Diisocyanate in Betracht. Im einzelnen seien beispielhaft genannt: aliphatische Diisocyanate, wie Hexamethylen-diisocyanat-1,6, 2-Methyl-pentamethylen-diisocyanat-1,5, 2-Ethyl-butylen-diisocyanat-1,4 oder Mischungen aus mindestens 2 der genannten C₆-Alkylen-diisocyanate, Pentamethylen-diisocyanat-1,5 und Butylen-diisocyanat-1,4, cycloaliphatische Diisocyanate, wie 1-Isocyanato-3,3,5-trimethyl-5-isocyanatomethylcyclohexan (Isophoron-diisocyanat), 1,4-Cyclohexan-diisocyanat, 1-Methyl-2,4- und -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische und vorzugsweise aromatische Diisocyanate, wie 2,4-Toluylen-diisocyanat, Gemische aus 2,4- und 2,6-Toluylendiisocyanat, 4,4'-, 2,4'- und 2,2'-Diphenylmethan-diisocyanat, Gemische aus 2,4'- und 4,4'-Diphenylmethan-diisocyanat, urethanmodifizierte flüssige 4,4'- und/oder 2,4'-Diphenylmethan-diisocyanate, 4,4'-Diisocyanato-diphenylethan- (1,2) und 1,5-Naphthylen-diisocyanat. Vorzugsweise verwendet werden Hexamethylen-diisocyanat-1,6, 4,4'-Dicyclohexylmethan-diisocyanat, Isophoron-diisocyanat, Diphenylmethan-diisocyanat-Isomerengemische mit einem 4,4'-Diphenylmethan-diisocyanatgehalt von größer als 96 Gew.-% und insbesondere 4,4'-Diphenylmethan-diisocyanat.
e) Als gegenüber Isocyanaten reaktive Substanzen (e) eignen sich beispielsweise Polyhydroxylverbindungen mit Molekulargewichten von 500 bis 8000, vorzugsweise Polyetherole und Polyesterole. In Betracht kommen jedoch auch hydroxylgruppenhaltige Polymere, beispielsweise Polyacetale, wie Polyoxymethylene und vor allem wasserunlösliche Formale, z.B. Polybutandiolformal und Polyhexandiolformal, und aliphatische Polycarbonate, insbesondere solche, aus Diphenylcarbonat und Hexandiol,1,6, hergestellt durch Umesterung, mit den oben genannten Molekulargewichten. Die genannten Polyhydroxylverbindungen können als Einzelkomponenten oder in Form von Mischungen zur Anwendung kommen.
   Die Mischungen zur Herstellung der TPU bzw. die TPU müssen zumindest überwiegend auf difunktionellen gegenüber Isocyanaten reaktiven Substanzen basieren. Die mit diesen Mischungen hergestellten TPU sind somit vorwiegend unverzweigt, d.h. überwiegend nicht vernetzt, aufgebaut.

Geeignete Polyetherole können hergestellt werden nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat als Katalysatoren oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest und gegebenenfalls einem Startermolekül, das 2 reaktive Wasserstoffatome gebunden enthält. Als Alkylenoxide seien z.B. genannt: Ethylenoxid, 1,2-Propylenoxid, Tetrahydrofuran, 1,2- und 2,3-Butylenoxid. Vorzugsweise Anwendung finden Ethylenoxid und Mischungen aus Propylenoxid-1,2 und Ethylenoxid. Die Alkylenoxide können einzeln, alternierend nacheinander oder als Mischung verwendet werden. Als Startermolekül kommen beispielsweise in Betracht: Wasser, Aminoalkohole, wie N-Alkyl-dialkanolamine, beispielsweise N-Methyl-diethanolamin und Diole, z.B. Alkandiole oder Dialkylenglykole mit 2 bis 12 C,Atomen, vorzugsweise 2 bis 6 C-Atomen, wie Ethandiol, Propandiol-1,3, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans (Polyoxytetramethylen-glykole).

Vorzugsweise verwendet werden Polyetherole aus Propylenoxid-1,2 und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist und insbesondere Polyoxytetramethylen-glykole.

Solche Polyetherole können erhalten werden, indem man z.B. an das Startermolekül zunächst das Propylenoxid-1,2 und daran anschließend das Ethylenoxid polymerisiert oder zunächst das gesamte Propylenoxid-1,2 im Gemisch mit einem Teil des Ethylenoxids copolymerisiert und den Rest des Ethylenoxids anschließend anpolymerisiert oder schrittweise zunächst einen Teil des Ethylenoxids, dann das gesamte Propylenoxid-1,2 und dann den Rest des Ethylenoxids an das Startermolekül anpolymerisiert.

Die im Falle der TPU im wesentlichen linearen Polyetherole besitzen Molekulargewichte von 500 bis 8000, vorzugsweise 600 bis 6000 und insbesondere 800 bis 3500. Sie können sowohl einzeln als auch in Form von Mischungen untereinander zur Anwendung kommen.

Geeignete Polyesterole können beispielsweise aus Dicarbonsäuren mit 2 bis 12 Kohlenstoffatomen, vorzugsweise 4 bis 8 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Korksäure, Azelainsäure, Sebacinsäure und vorzugsweise Adipinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Desgleichen sind Mischungen aus aromatischen und aliphatischen Dicarbonsäuren einsetzbar. Zur Herstellung der Polyesterole kann es gegebenenfalls vorteilhaft sein, anstelle der Dicarbonsäuren die entsprechenden Dicarbonsäurederivate, wie Dicarbonsäureester mit 1 bis 4 Kohlenstoffatomen im Alkoholrest, Dicarbonsäureanhydride oder Dicarbonsäurechloride zu verwenden. Beispiele für mehrwertige Alkohole sind Alkandiole mit 2 bis 10, vorzugsweise 2 bis 6 Kohlenstoffatomen, wie Ethandiol, Propandiol-1,3, Butandiol-1,4, Pentandiol-1,5, Hexandiol-1,6, Decandiol-1,10, 2,2-Dimethylpropandiol-1,3, Propandiol-1,2 und Dialkylenether-glykole wie Diethylenglykol und Dipropylenglykol. Je nach den gewünschten Eigenschaften können die mehrwertigen Alkohole allein oder gegebenenfalls in Mischungen untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise (ω-Hydroxycapronsäure und vorzugsweise Polymerisationsprodukte von Lactonen, beispielsweise gegebenenfalls substituierten ω-Caprolactonen.

Als Polyesterole vorzugsweise verwendet werden Alkandiol-polyadipate mit 2 bis 6 Kohlenstoffatomen im Alkylenrest, wie z.B. Ethandiol-polyadipate, 1,4-Butandiol-polyadipate, Ethandiol-butandiol-1,4-polyadipate, 1,6-Hexandiol-neopentylglykol-polyadipate, Polycaprolactone und insbesondere 1,6-Hexandiol- 1,4-butandiol-polyadipate.

Die Polyesterole besitzen Molekulargewichte (Gewichtsmittel) von 500 bis 6000, vorzugsweise von 800 bis 3500.
f) Als Kettenverlängerungsmittel (f), die üblicherweise Molekulargewichte von 60 bis 499, vorzugsweise 60 bis 300 aufweisen, kommen vorzugsweise Alkandiole mit 2 bis 12 Kohlenstoffatomen, vorzugsweise mit 2,4 oder 6 Kohlenstoffatomen, wie z.B. Ethandiol, Hexandiol-1,6, und insbesondere Butandiol-1,4 und Dialkylenetherglykole wie z.B. Diethylenglykol und Dipropylenglykol in Betracht. Geeignet sind jedoch auch Diester der Terephthalsäure mit Alkandiolen mit 2 bis 4 Kohlenstoffatomen, wie z.B. Terephthalsäure-bis-ethandiol oder -butandiol-1,4, Hydroxyalkylenether des Hydrochinons, wie z.B. 1,4-Di-(β-hydroxyethyl)-hydrochinon, (cyclo) aliphatische Diamine, wie z.B. 4,4'-Diaminodicyclohexylmethan, 3,3'-Dimethyl-4,4'-diaminodicyclohexylmethan, 1-Amino-3,3,5-trimethyl-5-aminomethyl-cyclohexan, Ethylendiamin, 1,2-, 1,3-Propylen-diamin, N-Methyl-propylendiamin-1,3, N,N'-Dimethylethylendiamin und aromatische Diamine, wie z.B 2,4- und 2,6-Toluylen-diamin, 3,5-Diethyl-2,4- und -2,6-toluylen-diamin und primäre, ortho-di-, -tri- und/oder -tetraalkylsubstituierte 4,4'-Diamino-diphenylmethane. Als Kettenverlängerungsmittel finden vorzugsweise Verwendung Alkandiole mit 2 bis 6 C-Atomen im Alkylenrest, insbesondere Butandiol-1,4 und/oder Dialkylenglykole mit 4 bis 8 Kohlenstoffatomen.

Zur Einstellung von Härte und Schmelzpunkt der TPU können die Aufbaukomponenten (e) und (f) in relativ breiten molaren Verhältnissen variiert werden. Bewährt haben sich molare Verhältnisse von Polyhydroxylverbindungen (e) zu Kettenverlängerungsmitteln (f) von 1 : 1 bis 1 : 12, insbesondere von 1 : 1,8 bis 1 : 6,4, wobei die Härte und der Schmelzpunkt der TPU mit zunehmendem Gehalt an Diolen ansteigt.
g) Geeignete Katalysatoren, welche insbesondere die Reaktion zwischen den NCO-Gruppen der Diisocyanate (d) und den Hydroxylgruppen der Aufbaukomponenten (e) und (f) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,002 bis 0,1 Teilen pro 100 Teile Polyhydroxylverbindung (e) eingesetzt.
h) Neben Katalysatoren können den Aufbaukomponenten (d) bis (f) auch übliche Hilfsmittel und/oder Zusatzstoffe (h) hinzugefügt werden. Genannt seien beispielsweise oberflächenaktive Substanzen, Flammschutzmittel, Keimbildungsmittel, Oxidationsverzögerer, Stabilisatoren, Gleit- und Entformungshilfen, Farbstoffe und Pigmente, Inhibitoren, Stabilisatoren gegen Hydrolyse, Licht, Hitze oder Verfärbung, anorganische und/oder organische Füllstoffe, Verstärkungsmittel und Weichmacher.

Nähere Angaben über die oben genannten Hilfsmittel- und Zusatzstoffe sind der Fachliteratur zu entnehmen.

Das Reaktionsgemisch enthaltend (d), (e) und gegebenenfalls (f), (g) und/oder (h) kann beispielsweise nach dem bekannten Extruderverfahren oder nach dem ebenfalls bekannten Bandverfahren umgesetzt werden.

Die Polymerisation von Vinylchlorid zur Herstellung von PVC ist bekannt. Als Monomeres kann entweder nur Vinylchlorid eingesetzt werden oder Mischungen von Vinylchlorid und anderen Monomeren (Comonomere) mit mindestens 50 Gew. -% Vinylchlorid, bezogen auf die Gesamtmasse der Monomeren. Als Comonomere des Vinylchlorids kommen insbesondere Vinylester, z.B. Vinylacetat, Vinylpropionat u.a., Vinylether wie Vinylmethylether, Vinylethylether, Vinylisobutylether u.a., Vinylidenchlorid, C₁-C₁₈-Alkylester der Acrylsäure wie Butylacrylat und 2-Ethylhexylacrylat, Dialkylmaleate wie Dibutylmaleat, Olefine wie Ethen, Propen, Isobuten und längerkettige C₆-C₁₅-Olefine, Diene wie Butadien sowie vinylaromatische Verbindungen wie Styrol und/oder α-Methylstyrol in Betracht. Die Polymerisation von Vinylchlorid kann ebenfalls in Gegenwart von Homo- und/oder Copolymerisaten der oben genanten Monomere erfolgen.

Bei einer Suspensionspolymerisation können übliche Schutzkolloide eingesetzt werden, wie teilverseifte Polyvinylalkohole oder Celluloseether wie Methyl-, Methylhydroxyethyl- und Methylhydroxypropylcellulose. Polyvinylalkohole und Celluloseether können auch in Kombination eingesetzt werden.

Als monomerlösliche Initiatoren kommen die üblichen Peroxide, Perester, Percarbonate und Azoverbindungen in Betracht, beispielsweise Dilauroylperoxid, Dibenzoylperoxid, tert.-Butylperneodecanoat, tert. -Butylperpivalat, tert.-Butyl-2-ethylhexanoat, Trimethylpentylperneodecanoat, Diisopropylperoxidicarbonat, Di-n-butylperoxidicarbonat, Di-2-ethylhexylperoxidicarbonat, Dicyclohexylperoxidicarbonat.

Vor, während oder nach einer Suspensionspolymerisation kann der pH-Wert durch Zugabe von Puffersalzen wie Natriumphosphat, Natriumpolyphosphat oder Natriumhydrogencarbonat oder den entsprechenden Kaliumsalzen eingestellt werden.

Die Polymerisationstemperatur richtet sich nach dem gewünschten Molekulargewicht bzw. K-Wert des Produktes und kann zwischen 20 und 100°C, vorzugsweise zwischen 35 und 80°C, für die meisten Produkte zwischen 45 und 70°C liegen. Die Polymerisation wird im allgemeinen bei einem Umsatz von 70 % bis 90 % abgebrochen.

Die Polymerisation kann bei Drücken von 5 bis 30 bar durchgeführt werden, vorzugsweise bei 8 bis 20 bar, wobei der Druck im allgemeinen durch den Dampfdruck des Vinylchlorids bei der gewünschten Polymerisationstemperatur vorgegeben wird.

Die Erfindung wird in den nachfolgenden Ausführungsbeispielen näher erläutert.

Thermoplastisches Polyurethan (Elastollan® 1185 A, Elastogran GmbH) wurde in Zweiwellenextrudern mit 20 %, bezogen auf das Gewicht der gesamten Mischung, PVC-compound (HY-VIN XT®76597, Fa. Hydro Polymers) mit oder ohne Zugabe von Stabilisatoren zu einer homogenen Mischung verarbeitet und granuliert. Der PVC-compound enthielt 70 Gew.-Teile PVC (Vinoflex S 6514 bzw. Vinoflex S 7114, BASF Aktiengesellschaft) und 30 Gew.-Teile eines Phthalats als Weichmacher (Palatinol® AH, BASF AG). Die Abmessungen der Extruder, die Temperatur der Mischung, die zugegebenen Stabilisatoren sowie die Eigenschaften der Produkte sind in den Tabellen 1, 2 und 3 angegeben. Die Gewichtsangaben zu den zugesetzten Stabilisatoren (Gew.-T. entspricht Gew.-Teile) beziehen sich auf das Gewicht der hergestellten Mischung aus TPU und PVC-compound. Die Zugabe des Stabilisatores (Stab.) gibt an, über welche Komponente der Stabilisator in den Extruder zudosiert wurde. Die Beispiele 3 bis 13 sind erfindungsgemäße Beispiele.

**Tabelle 1**

| Beispiel | 1 | 2 | 3 | 4 | 5 |
|---|---|---|---|---|---|
| Durchmesser des Extruders [mm] | 40 | 80 | 40 | 80 | 80 |
| Temperatur der Mischung im Extruder [°C] | 200 | 230 | 200 | 230 | 230 |
| Irgastab® BZ 591 [Gew.-T.] | - | - | 1,6 | 0,8 | 1,6 |
| Zugabe des Stab. über: | - | - | zur Mischung | zur Mischung | zur Mischung |
| Farbe des Produktes | gelb | gelb | unverfärbt | unverfärbt | unverfärbt |
| Shore-Härte | 88 A | 89 A | 88 A | 87 A | 87 A |
| Zugfestigkeit [N/mm²] | 32 | 26 | 21 | 26 | 26 |
| Reißdehnung [%] | 680 | 410 | 680 | 530 | 560 |
| Weiterreißfestigkeit [N/mm] | 57 | 66 | 52 | 63 | 61 |
| Abrieb [mm³] | 69 | 53 | 103 | 74 | 69 |
| Dichte [g/cm³] | 1,145 | 1,145 | 1,145 | 1,145 | 1,145 |

**Tabelle 2**

| Beispiel | 6 | 7 |
|---|---|---|
| Durchmesser des Extruders [mm] | 19 | 19 |
| Temperatur der Mischung im Extruder [°C] | 225 | 225 |
| Irgastab® BZ 591 [Gew.-T.] | 1,6 | - |
| Sicostab® C 651 [Gew.-T.] | - | 1,6 |
| Zugabe des Stab. über: | TPU | TPU |
| Farbe des Produktes | unverfärbt | unverfärbt |

**Tabelle 3**

| Beispiel | 8 | 9 | 10 | 11 | 12 | 13 |
|---|---|---|---|---|---|---|
| Durchmesser des Extruders [mm] | 19 | 19 | 19 | 19 | 19 | 19 |
| Temperatur der Mischung im Extruder [°C] | 213 | 234 | 215 | 237 | 201 | 235 |
| Irgastab® BZ 561 [Gew.-T.] | 1,82 | 1,82 | 1,82 | 1,82 | | |
| Irgastab® BZ 556 [Gew.-T.] | | | | | 1,82 | 1,82 |
| Zugabe des Stab. über: | PVC | PVC | PVC | PVC | PVC | PVC |
| Farbe des Produktes | unverfärbt | unverfärbt | unverfärbt | unverfärbt | unverfärbt | unverfärbt |
| Irgastab® BZ 591, BZ 561, BZ 556: enthält Barium/Zink-Mischcarboxylate, (Ciba Additive GmbH) Sicostab® C 651: enthält Metallcarbonat, Calzium- und Zinkverbindungen langkettiger Fettsäuren (BASF Aktiengesellschaft) | | | | | | |

Die erfindungsgemäßen Mischungen weisen trotz der hohen Verarbeitungstemperaturen wie gewünscht keine Verfärbungen auf, d.h. diese Produkte besitzen eine "Farbe" die der der reinen TPU entspricht. Aufgrund ihrer hervorragenden Eigenschaften sind diese Produkte sehr gut zur Herstellung von transparenten Formkörpern, Folien, Schläuchen, Kabelummantellungen sowie spritzgegossenen Formkörpern aller Art geeignet.

Die in den Vergleichsbeispielen 1 und 2 hergestellten Produkte sind dagegen unerwünscht gelb bis gelb-orange gefärbt. Diese Verfärbung verstärkte sich bei dem im Beispiel 1 hergestellten Produkt durch eine Lagerung für 3 Stunden bei einer Temperatur von 80 °C, sowie 3 Stunden bei 110 °C.

## Patentansprüche

1. Transparente Mischungen enthaltend (a) thermoplastische Polyisocyanat-Polyadditionsprodukte, (b) Polyvinylchlorid und 3 bis 30 Gew. -Teile, bezogen auf 100 Gew. -Teile Polyvinylchlorid, (c) Stabilisatoren, die bei der Herstellung der Mischungen in der Komponente (a) und/oder (b) löslich sind und eine Verfärbung der Mischungen aufgrund der thermischen Belastung bei der Herstellung verhindern.

2. Mischungen nach Anspruch 1, dadurch gekennzeichnet, daß man als (c) Stabilisatoren, enthaltend mindestens eine Barium- und/oder Calziumverbindung, in Kombination mit mindestens einer Zinkverbindung einsetzt.

3. Mischungen nach Anspruch 1, dadurch gekennzeichnet, daß man als (c) Stabilisatoren, enthaltend eine Kombination aus mindestens einem Barium- und/oder Calziumcarboxylat und mindestens einem Zinkcarboxylat, zusammen mit mindestens einem weiteren Stabilisator, ausgewählt aus der Gruppe der organischen Phosphite, phenolischen Antioxidantien, Metallcarbonate und epoxydierten Öle oder Fettsäuren, einsetzt.

4. Mischungen nach Anspruch 1, dadurch gekennzeichnet, daß die Mischungen
50 bis 99,195 Gew.-% (a)
0,7 bis 35 Gew.-% (b),
0,084 bis 40 Gew.-% Weichmacher und
0,021 bis 10,5 Gew.-% (c)
enthalten, wobei die Gewichtsangaben auf das Gesamtgewicht der Komponenten (a), (b) und (c) bezogen sind.

5. Verfahren zur Herstellung von transparenten Mischungen enthaltend (a) thermoplastische Polyisocyanat-Polyadditionsprodukte, (b) Polyvinylchlorid und 3 bis 30 Gew.-% (c) Stabilisatoren, bezogen auf 100 Gew.-% Polyvinylchlorid, die bei der Herstellung der Mischungen in der Komponente (a) und/oder (b) löslich sind und eine Verfärbung der Mischungen aufgrund der thermischen Belastung bei der Herstellung verhindern, dadurch gekennzeichnet, daß man (c) der Komponente (a) und/oder (b) vor, während und/oder nach dem homogenen Mischen von (a) und (b) zusetzt.

6. Verfahren nach Anspruch 5, dadurch gekennzeichnet, daß man die Komponenten (a) und (b) in geschmolzenem Zustand in einem Extruder mischt.

7. Verwendung von Mischungen gemäß einem der Ansprüche 1 bis 4 zur Herstellung von transparenten Formkörpern, Schläuchen, Folien, Platten, Kabelummantelungen und spritzgegossenen Formkörpern.

8. Transparente Formkörper, Schläuche, Folien, Platten, Kabelummantellungen und spritzgegossene Formkörper erhältlich durch Extrusion oder Spritzguß von Mischungen gemäß einem der Ansprüche 1 bis 4.
